# EUROPÄISCHE PATENTSCHRIFT

(11) **EP 0 580 647 B1**
(45) Veröffentlichungstag und Bekanntmachung des Hinweises auf die Patenterteilung: **14.06.1995**
(21) Anmeldenummer: 92907858.2
(22) Anmeldetag: 04.04.1992
(51) Int. Cl.: B60R 13/10, B05C 17/06, C03C 15/00

(54) **VORRICHTUNG ZUR DIEBSTAHLSSICHERUNG VON KRAFTFAHRZEUGEN DURCH EINEN IN AM FAHRZEUG VORHANDENE GLASFLÄCHEN EINGEÄTZTEN BUCHSTABEN- UND/ODER ZAHLEN-KENNCODE UNTER VERWENDUNG EINER ÄTZPASTE**
ANTITHEFT DEVICE FOR MOTOR VEHICLES CONSISTING OF AN ALPHABETICAL AND/OR NUMERICAL IDENTIFICATION CODE ETCHED ONTO EXISTING GLASS SURFACES IN THE VEHICLE BY MEANS OF AN ETCHING PASTE
DISPOSITIF DE GRAVAGE ANTIVOL POUR VEHICULES AUTOMOBILES, PERMETTANT LE GRAVAGE PAR ATTAQUE A L'AIDE D'UNE PATE D'ATTAQUE D'UN CODE D'IDENTIFICATION A LETTRES ET/OU A CHIFFRES SUR DES SURFACES DE VERRE EXISTANT DANS LEDIT VEHICULE

(30) Priorität: 17.04.1991 DE 4112517
(43) Veröffentlichungstag der Anmeldung: 02.02.1994
(73) Patentinhaber: Gnoyke, Horst, D-22850 Norderstedt (DE)
(72) Erfinder: Ristau, Harald, D-21077 Hamburg (DE)
(86) Internationale Anmeldenummer: EP9200766
(87) Internationale Veröffentlichungsnummer: WO9218354

(56) Entgegenhaltungen:
- AU-B- 531 407
- DE-U- 8 710 986
- DE-U- 9 005 027
- FR-A- 2 551 450
- GB-A- 1 366 343

## Beschreibung

Die Erfindung betrifft eine Vorrichtung zur Diebstahlssicherung Von Kraftfahrzeugen durch einen in am Fahrzeug vorhandene Glasflächen vermittels einer Ätzpaste eingeätzten Buchstaben- und/oder Zahlen-Kenncode, bestehend aus einer rechteckförmigen, die Kennzeichen in Form von durch Ausstanzungen erhaltene Durchbrechungen tragenden Schablonenfolie aus einem gegenüber der Ätzpaste resistenten Material, mit auf ihrer Rückseite aufgebrachten Beschichtung aus einem Klebemittel, die mittels einer abziehbaren Trägerfolie aus einem Ölpapier abgedeckt ist, und aus einer auf der Oberseite der Schablonenfolie gehaltenen Applikationsfolie aus einer Kunststoffolie mit auf ihrer der Schablonenfolie zugekehrten Fläche aufgetragenen Beschichtung aus einem Klebemittel zur Halterung und Fixierung von inselförmigen, bei der Herstellung der Durchbrechungen für die Kennzeichen durch Ausstanzen verbliebenen Schablonenfolienflächen, und eine Ätzpaste hierfür.

Zur Diebstahlssicherung von Kraftfahrzeugen ist es bekannt, außer der üblichen Kennzeichnung in die am Fahrzeug vorhandenen Scheiben Buchstaben-Kenncode dauerhaft und unverwischbar einzugravieren, wobei diese Buchstaben-Kenncode in einem Zentralcomputer zur Überwachung gespeichert sind, wobei jedes Kraftfahrzeug einen individuellen Buchstaben-Kenncode erhält. Neben dem Eingravieren von Buchstaben-Kenncoden in alle am Fahrzeug vorhandenen Glasscheiben ist es auch bekannt, die Buchstaben-Kenncode in die Gläser der Scheinwerfer und Rücklichter einzugravieren.

Durch die DE-A-28 29 457 ist die Kennzeichnung von Kraftfahrzeugen durch eine außer der üblichen Kennzeichnung vorgesehene Kennzeichnung mit der Buchstaben- und Zahlenkombination des dem Kraftfahrzeug zugeteilten amtlichen Kennzeichens an der Karosserie und/oder den Scheiben des Kraftfahrzeuges bekannt. Diese Kennzeichnung wird in der Weise vorgenommen, daß die Buchstaben- und Zahlenkombination des zugeteilten amtlichen Kennzeichens unmittelbar auf die Karosserie und/oder an die Scheiben des Kraftfahrzeuges außenseitig mit einer an der Karosserie und/oder den Scheiben anhaftenden und diese chemisch mit bleibender Zerstörung angreifenden bzw. zersetzenden, pastösen oder flüssigen Substanz aufgetragen wird. Das Einätzen der Buchstaben- und Zahlenkombination erfolgt unter Anwendung einer Ätzpaste in freier Schreibweise oder mit Hilfe von Buchstaben- und Zahlenschablonen. Die hierbei verwendete Ätzpaste besteht aus Kalziumsulfat als Verdichter, Kaliumfluorid als Fluorlieferant und Schwefelsäure zur Freisetzung von Flußsäure.

Die DE-A-36 19 717 beschreibt eine Vorrichtung zum Aufbringen von Markierungen auf Autoscheiben zum Vergleich der Übereinstimmung und Kontrolle mit dem Kraftfahrzeug-Nummernschild zur Diebstahlsvermeidung und besteht aus einer Schablone aus einem ätzmittelresistenten Kunststoff.

Ein Verfahren zur Erzeugung von Schriftzeichen od.dgl. auf Flachgläsern durch einen Stempel, der mit einer ätzenden Säure bestrichen ist, ist durch die DE-A-29 00 479 bekannt. Bei diesem Verfahren wird die ätzende Säure durch einen Stempel aus weichem porigem, spezifisch leichtem und saugfähigem Holz, wie z.B. Balsa-Holz, in den die gewünschten Zeichen eingeprägt wurden, auf das Glas übertragen, wobei sich die Verweildauer des Stempels auf dem Glas auf die Tiefenwirkung der Ätzung auswirkt. In dem weichen und porigen Stempel saugt sich aufgrund des Osmose-Effektes die aufgebrachte Säure voll ein und wird bei Aufbringung des Stempels auf ein Flachglas auf dieses übertragen. Hierbei saugt sich der Stempel an dem Flachglas derart fest, daß ein Verrücken des Stempels von selbst nicht möglich ist. Auf diese Weise soll eine saubere Übertragung des Schriftbildes auf die zu ätzende Fläche gewährleistet werden. Mit diesem Verfahren ist jedoch nicht möglich, Buchstaben und/oder Zahlen mit scharfen Konturen in die Glasfläche einzusetzen, zumal bei einer ungeschickten Handhabung des Stempels das gesamte Schriftbild verwischt werden kann.

Ein weiteres Verfahren und eine Kennzeichnung zur Diebstahlssicherung von Kraftfahrzeugen ist durch die DE-A-36 24 552 bekannt. Dieses Verfahren besteht darin, daß für jedes Kraftfahrzeug ein individueller Buchstaben-Kenncode außenseitig in alle am Fahrzeug vorhandenen Glasscheiben sowie in die Gläser der Scheinwerfer und Rücklichter dauerhaft und unverwischbar eingraviert und in einem Zentralcomputer zur Überwachung gespeichert wird. Der Buchstaben-Kenncode mit den dazu gehörenden Kraftfahrzeug- und Halterdaten wird in einem Zentralcomputer gespeichert, der Tag und Nacht für Ordnungsbehörden zugänglich sein soll, wodurch die Überwachung von Kraftfahrzeugen verbessert werden soll.

Die Verwendung einer Ätzpaste oder einer Ätzflüssigkeit zur Diebstahlssicherungskennzeichnung von Kraftfahrzeugen durch Einätzen des amtlichen Kennzeichens auf der Fahrzeugaußenseite, insbesondere der Windschutzscheibe, ist ferner durch die EP-A-0 006 641 bekannt.

Die Erfindung geht von einer Vorrichtung zur Diebstahlssicherung von Kraftfahrzeugen der eingangs genannten Art aus, die durch die DE-U-9 005 027 bekannt ist, bei der eine mit ausgestanzten Hohlflächen bzw. Durchbrechungen in Form von Code-Zeichen versehene Schablonenfolie auf ihrer mit einer Klebemittelschicht versehenen Unterseite ein von der Klebemittelschicht abziehbares Trägerblatt als Schutzblatt aus einem Ölpapier und auf ihrer Oberseite ein Applikations-Papier trägt, das an der Schablonenfolie mittels eines Klebemittels mit geringer Haftkraft gehalten wird, um Buchstaben- und Zahleninseln der aus der Schablonenfolie ausgestanzten Buchstaben und/oder Zahlen in Position zu halten. Hierbei hat es sich jedoch gezeigt, daß beim Abziehen der Trägerfolie von der Schablonenfolie ein Teil des Klebemittels mitgenommen wird, so daß sich die Haftkraft der Klebemittelbeschichtung verringert und eine ausreichende Haftung der Schablonenfolie an der Glasfläche nicht gewährleistet ist. Insbesondere durch die geringere Klebekraft in den Randzonen der Ausstanzungen der Schablonenfolie ist eine Randzonenfixierung auf der Glasscheibe nicht möglich, was dazu führt, daß die aufgetragene Ätzpaste zwischen Schablonenfolie und Glasscheibe kriecht, so daß die in die Glasscheibe eingeätzten Buchstaben und Zahlen ausgefranste Ätzränder aufweisen; weisen die Buchstaben und Zahlen kleine Abmessungen auf, dann ist ein Ineinanderlaufen der Ränder der eingeätzten Buchstaben und Zahlen nicht vermeidbar. Außerdem können beim Abziehen der Trägerfolie Buchstaben- und Zahleninseln, die keine Randverbindung zur Schablonenfolie haben, mit abgezogen oder in ihren Randbereichen angehoben werden, so daß die aufgetragene Ätzpaste in die Randbereiche einfließen kann. Auch ist nicht gewährleistet, daß bei einem Abziehen der an der Schablonenfolie haftenden Applikationsfolie Buchstaben- und Zahleninseln der ausgestanzten Buchstaben und Zahlen mit abgehoben werden.

Durch die GB-A-1 366 343 ist es bekannt, eine Schablonenfolie mit ihrer Klebemittelschicht auf der Trägerfolie derart zu halten, daß die Schablonenfolie von der Trägerfolie ohne Zerstörung der Klebemittelschicht abziehbar ist. Die Klebemittelschicht wird zwar nicht zerstört, jedoch die Wirkung der Klebkraft wird durch Abheben von Klebemittelpartikelchen von der Schablonenfolie verringert. Allerdings stellt sich hier nicht das Problem einer geringen Haftung im Randzonenbereich der Buchstaben- und Zahleninseln der Ausstanzungen in der Schablonenfolie, da keine Buchstaben- oder Zahlenausstanzungen vorgesehen sind.

Sowohl bei der Verwendung von Schablonen als auch bei der Verwendung eines weichen und porigen Stempels fließt die aufgebrachte Ätzflüssigkeit oder -paste zwischen die Glasfläche und die Schablone, so daß es im Bereich der durch Ausstanzungen hergestellten Kennzeichen-Durchbrechungen zu einer Verwischung der Konturen kommt, so daß zahlreiche Vorrichtungen ein größeres handwerkliches Geschick erfordern, um Codierungen mit einigermaßen scharfen Konturen zu erhalten. Bei der Verwendung des Stempels kommt es leicht bei ungeschickter Handhabung zu einem Verwischen des gesamten Schriftbildes.

Es ist Aufgabe der Vorliegenden Erfindung, eine Vorrichtung unter Verwendung einer Ätzpaste der eingangs beschriebenen Art zu schaffen, mit der konturenscharfe Kennzeichnungen auf einer Glasfläche aufbringbar sind, ohne daß es zu einem Ausfransen der Ätzränder der aufgebrachten Kennzeichnungen kommt und ohne daß die durch Ausstanzungen von Buchstaben und/oder Zahlen erhaltenen randunverbundenen kleinen Zahlen- und/oder Buchstabeninseln in ihren fixierten Stellungen verändert werden oder es zu Randabhebungen kommt.

Diese Aufgabe wird durch die in dem Anspruch 1 angegebenen Merkmale gelöst.

Mit der erfindungsgemäßen Vorrichtung ist es möglich, konturenscharfe Codierungen durch Einätzen z.B. alphanumerischer Ziffernfolgen auf Glasflachen, insbesondere Glasflächen von Kraftfahrzeugen, zu erhalten, wobei trotz Verwendung einer Schablone für die Buchstaben und Ziffern ein Verrutschen der Schablone wahrend des Ätzvorganges vermieden wird. Ein Ausfransen der Ränder der in die Glasfläche eingeätzten Buchstaben und Ziffern wird ebenfalls vermieden, da die Ätzflüssigkeit bzw. -paste aufgrund ihrer Ausgestaltung nicht zwischen Schablone und Glasfläche kriechen kann. Zur Ausbildung scharfer Konturen der Kennzeichen wird eine nicht im Rand- und Konturenbereich der Durchbrechungen für die Kennzeichen in der Schablone zwischen dieser und der Glasfläche kriechende oder sich verteilende Ätzpaste verwendet. Es hat sich überraschenderweise gezeigt, daß diese Eigenschaften mit einer Ätzpaste erreicht werden, die sich wie folgt zusammensetzt:
45% bis 50% Bariumsulfat
10% bis 12% Ammoniumhydrogenfluorid
11% bis 13% Polysaccharid auf der Basis von Galactose, Rhamnose, Arabinose und Glucuronsäure,
wobei der Rest Wasser ist.

Die Schablone selbst besteht aus säureresistentem Material, wie z.B. aus einer Kunststoffolie oder einem anderen geeigneten Material. Die Verwendung einer Schablone erbringt den Vorteil, daß Kennzeichen auf die Glasfläche eingeätzt werden, die aufgrund ihrer Konturenschärfe leicht lesbar sind und aufgrund der Verwendung einer Ätzpaste mit den im Anspruch 3 angegebenen Eigenschaften ist auch die Möglichkeit gegeben, Schablonen mit Ziffern und/oder Zahlen zu verwenden, die in einer kleinen Schriftgröße vorliegen, so daß nur eine ganz kleine Fläche auf der Glasscheibe zum Anbringen der Codierung benötigt wird.

Das Einätzen von Kenncodes, wie Buchstaben - und/oder Zahlen-Kombinationen auf eine Glasfläche, wie z.B. eine Glasscheibe eines Kraftfahrzeuges, erfolgt in der Weise, daß eine selbstklebende Schablonenfolie nach den Abziehen der Trägerfolie auf der zu ätzenden Glasflache aufgebracht wird. Hierauf wird dann die Applikationsfolie von der Schablonenfolie abgezogen, so daß die in der Schablonenfolie ausgebildeten Durchbrechungen der Kennzeichen frei zur Aufnahme der Ätzpaste liegen. In die Aussparungen bzw. Durchbrechungen wird dann Ätzpaste eingebracht. Nach Ablauf einer Einwirkzeit wird die Schablonenfolie von der Glasfläche abgezogen und der Rest der Ätzpaste abgewischt.

Durch das Aufkleben der Schablonenfolie ist ein präzises Fixieren ohne Verrutschen gewährleistet; außerdem wird so auch ein Ausfransen der Ätzränder vermieden, da das Kriechen der Ätzpaste zwischen Folie und Glasfläche unterbunden wird. Die Konsistenz der Ätzpaste ist dabei derart beschaffen, daß auch kleinste Ecken der Schablone ausgefüllt werden; zusätzlich enthält die Ätzpaste einen Haftvermittler, um eine gleichmäßige Ätzung zu erhalten. Überraschenderweise hat es sich gezeigt, daß mit dieser Ätzpaste noch schärfere Konturen der Abbildung in der Glasfläche erhalten werden als nach bekannten Verfahren mit einer andersartigen Ätzpaste oder Ätzflüssigkeit. Damit kann auf einfachste Weise eine präzise Plazierung der Schablone und Ätzen konturenscharfer Code auf Glasflächen von Kraftfahrzeugen vorgenommen werden.

Besonders vorteilhaft ist dabei die Verwendung von Klebemitteln an der Schablonenfolie und der Applikationsfolie mit unterschiedlichen Klebekräften. Die Applikationsfolie haftet vor dem Freilegen der Durchbrechungen zum Aufstreichen der Ätzpaste an der Schablonenfolie. Auf diese Weise werden diejenigen Flächen der Schablonenfolie, die beim Ausstanzen der Kennzeichen keine Randverbindung haben, in ihren Stellungen fixiert und können nicht verschoben werden. Beim Abziehen der Applikationsfolie werden diese unverbundenen Schablonenfolienflächen aufgrund der geringeren Klebkraft gegenüber der Klebkraft der Schablonenfolie zur Glasfläche nicht mit abgezogen und bleiben in der vormals fixierten Stellung, so daß nach Beendigung des Ätzvorganges Kennzeichen mit einwandfreien Konturen in die Glasfläche eingeätzt sind, wobei die eingeätzten Kennzeichen, auch wenn diese kleine Größen aufweisen, gut und leicht lesbar sind.

Die Erfindung schließt auch ein Verfahren zum Einätzen von Kenncodes in Glasflächen unter Verwendung einer Vorrichtung gemäß einem der Ansprüche 1 oder 2 ein, bei dem nach dem Abziehen der Trägerfolie von der Schablonenfolie diese auf eine Glasfläche aufgeklebt, hierauf die Applikationsfolie abgezogen, die Ätzpaste im Bereich der Durchbrechungen der Schablonenfolie aufgetragen und nach einer ausreichenden Einwirkzeit die Schablonenfolie zusammen mit den Resten der Ätzpaste entfernt wird, wobei eine Ätzpaste verwendet wird, die aus einem Gemisch folgender Zusammensetzung besteht:
45% bis 50% Bariumsulfat
10% bis 12% Ammoniumhydrogenfluorid
11% bis 13% Polysaccharid auf der Basis von Galactose, Rhamnose oder Arabinose und Glucuronsäure oder einer Mischung aus diesen Substanzen,
wobei der Rest Wasser ist.

Ausführungsbeispiele der Erfindung werden nachstehend anhand der Zeichnungen näher erläutert. Es zeigen
Fig. 1 in einer schaubildlichen Ansicht eine aus einer Trägerfolie, einer Schablonenfolie und einer Applikationsfolie bestehende Vorrichtung zur Diebstahlssicherung von Kraftfahrzeugen durch einen in am Fahrzeug vorhandene Glasflächen eingeätzten Buchstaben- und/oder Zahlen-Kenncode,
Fig. 2 in einer Explosionsdarstellung die Vorrichtung gemäß Fig. 1,
Fig. 3 eine vergrößerte Seitenansicht der Vorrichtung,
Fig. 4 einen vergrößerten senkrechten Schnitt gemäß Linie IV-IV in Fig. 1 und
Fig. 5 einen vergrößerten Längsschnitt der auf eine Glasfläche aufgeklebten Schablonenfolie.

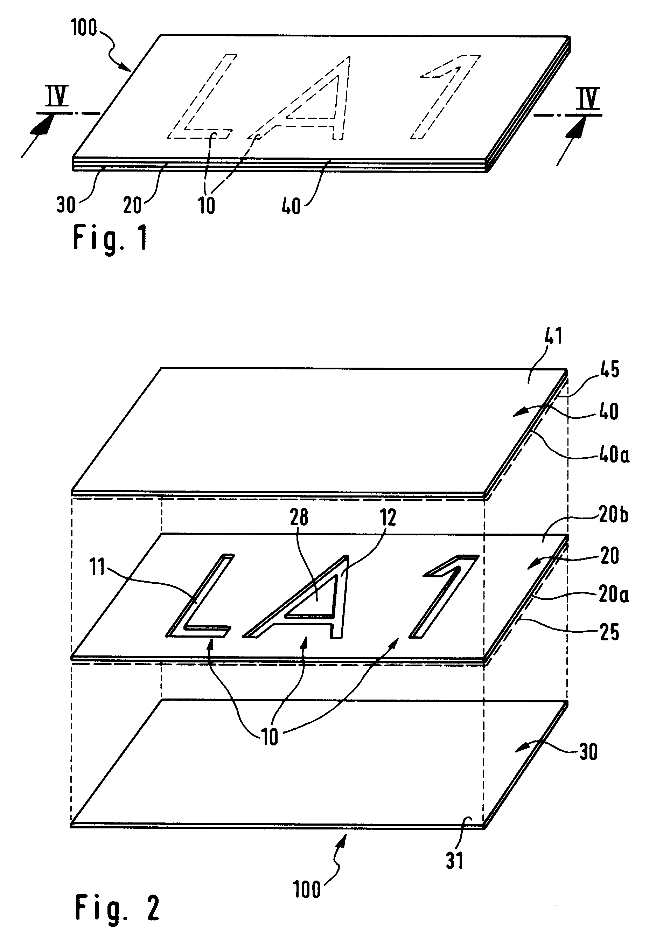

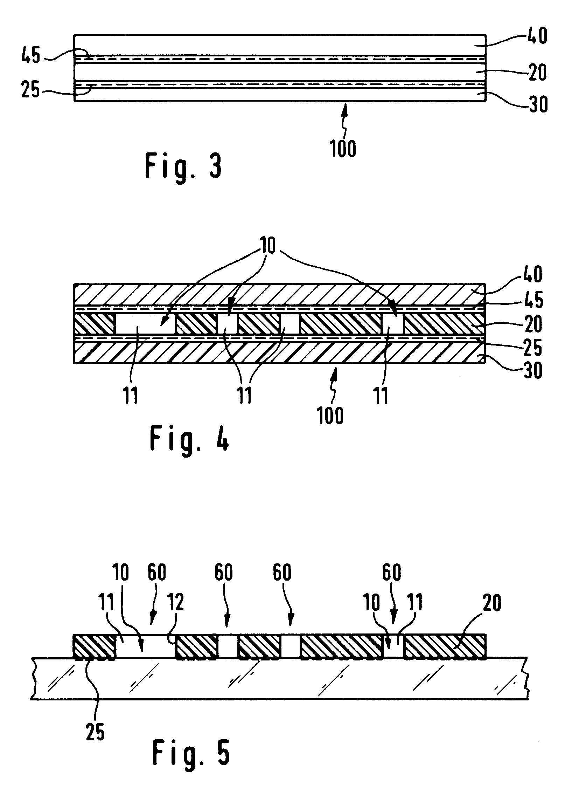

Die in Fig. 1 bis 4 gezeigte Vorrichtung 100 zur Diebstahlssicherung von Kraftfahrzeugen durch einen in am Fahrzeug vorhandene Glasflächen eingeätzten Buchstaben- und/oder Zahlen-Kenncode besteht aus einer rechteckförmigen oder eine geometrische Form aufweisenden Schablonenfolie 20, in der Kennzeichen 10 in Form durch Ausstanzungen od.dgl. erhaltene Durchbrechungen 11 ausgebildet sind. Diese Kennzeichen 10 stellen einen Buchstaben- und/oder Zahlen-Kenncode dar, wobei auch alphanumerische Ziffernfolgen oder Buchstaben allein oder in Kombination mit Ziffern in der Schablonenfolie 20 ausgebildet sein können. Die Schablonenfolie 20 besteht aus einem gegenüber der Ätzpaste säureresistenten Werkstoff, wie Kunststoff oder aus einem anderen geeigneten Werkstoff. Auf der Rückseite 20a der Schablonenfolie 20 ist eine Schicht 25 aus einem Klebemittel aufgebracht, so daß die Schablonenfolie 20 selbstklebend ist und auf eine Glasfläche 50, wie z.B. Glasscheibe eines Kraftfahrzeuges, aufgeklebt werden kann (Fig.5).

Neben der Schablonenfolie 20 umfaßt die Vorrichtung 100 eine Trägerfolie 30, die aus einem Zuschnitt 31 aus einem Ölpapier oder aus einem Kunststoff besteht. Diese Trägerfolie 30 deckt die Klebemittelschicht 25 der Schablonenfolie 20 ab und ist leicht von der Schablonenfolie abziehbar. Die Schablonenfolie 20 ist auf der Trägerfolie 30 derart gehalten, daß ohne Zerstörung der Klebemittelschicht 25 die Schablonenfolie 20 von der Trägerfolie 30 abziehbar ist.

Die Fixierung derjenigen Schablonenfolienflächen, die bei der Ausstanzung von Buchstaben oder Zahlen der Kennzeichen aus dem Schablonenfolienmaterial randunverbunden sind, erfolgt mittels einer Applikationsfolie 40 aus einem Zuschnitt 41, der vermittels einer Schicht 45 aus einem Klebemittel auf der Oberseite 20b der Schablonenfolie 20 gehalten ist. Diese Klebemittelbeschichtung 45 ist auf der der Schablonenfolie 20 zugekehrten Fläche 40a der Applikationsfolie 40 aufgebracht. Vermittels dieser Klebemittelbeschichtung 45 erfolgt die Halterung und Fixierung von inselförmigen, bei der Herstellung der Durchbrechungen 11 für die Kennzeichen 10 durch Ausstanzen verbliebenen Schablonenfolienflächen 28.

Die Schablonenfolie 20, die Tragerfolie 30 und die Applikationsfolie 40 weisen gleiche Formgebungen und Abmessungen auf, so daß im aufeinandergelegten Zustand alle Teile der Vorrichtung 100 miteinander deckungsgleich sind (Fig.1).

Die Klebekraft der Klebemittelbeschichtung 25 der Schablonenfolie 20 zu der Glasfläche 50 ist größer als die Klebkraft der Klebemittelbeschichtung 45 der Applikationsfolie 40. Aufgrund der Unterschiede in den Klebkräften der Klebemittelbeschichtungen 25 und 45 ist gewährleistet, daß bei einem Abziehen der Applikationsfolie 40 von der Schablonenfolie 20 die inselförmigen Schablonenflächen 28 in vorgegebener fixierter Stellung auf der Glasfläche 50 haften bleiben, jedoch die Applikationsfolie 40 von der Schablonenfolie mühelose abgezogen werden kann, ohne daß diese inselförmigen Schablonenflächen 28 mit von der Glasfläche 50 abgezogen werden.

Die Anwendung der Vorrichtung 100 erfolgt unter Verwendung einer Ätzpaste 60 wie folgt:
Die Trägerfolie 30 wird von der mit einem Klebemittel beschichteten Seite der Schablonenfolie abgezogen, woraufhin dann die Schablonenfolie 20 auf die Glasfläche 50 aufgeklebt wird. Damit ein ausreichendes Haftvermögen gewährleistet ist, wird auf die auf der Glasfläche 50 aufliegende Schablonenfolie 20 ein leichter Druck ausgeübt. Nachdem alle Teile, insbesondere Buchstaben- und Zahleninseln 28, sicher haften, wird die Applikationsfolie 40, die mit der Schablonenfolie 20 klebend verbunden ist, abgezogen; ein knitter- und verrutschungsfreies Kleben der Schablonenfolie 20 auf der Glasfläche 50 ist somit gewährleistet. Nach dem Abziehen der Applikationsfolie 40 von der auf die Glasfläche 50 aufgeklebten Schablonenfolie 20 liegen die in der Schablonenfolie 20 ausgebildeten Durchbrechungen 11 der Kennzeichen 10 die Buchstaben und/oder Zahlen frei, so daß nunmehr Ätzpaste 60 auf die Oberseite der Schablonenfolie 20 aufgebracht und in diese Durchbrechungen 11 eingebracht wird. Nach einer vorgegebenen Einwirkzeit wird die Schablonenfolie 20 von der Glasfläche 50 abgezogen; auf der Glasfläche 50 verbleiben die eingeätzten Kennzeichen 10.

Verwendet wird eine nicht im Rand- und Konturenbereich 12 der Durchbrechungen 11 für die Kennzeichen 10 in der Schablonenfolie 20 zwischen dieser und der Glasfläche 50 kriechende oder sich verteilende Ätzpaste 60. Durch die Verwendung einer derartigen Ätzpaste 60 wird ein Ausfransen der Ätzränder vermieden, da das Kriechen der Ätzpaste zwischen der Schablonenfolie 20 und der Glasfläche 50 unterbunden wird. Dieser Fließvorgang der Ätzpaste zwischen der Schablonenfolie 20 und der Glasfläche 50 wird noch zusätzlich dadurch unterbunden, daß die die Durchbrechungen 11 der Kennzeichen 10 begrenzenden Ränder 12 in der Schablonenfolie 20 gegenüber dem Schablonenfolienmaterial federnd- bzw. weich-elastisch ausgebildet sind. Besteht die Schablonenfolie 20 aus einen relativ spröden Kunststoffmaterial, dann ist eine vollflächige Anlage der Schablonenfolie 20 auf der Oberfläche der Glasfläche 50 gewährleistet. Durch entsprechende Behandlung des Materials der Schablonenfolie 20 kann der Randbereich 12 der Durchbrechungen 11 in Form von Ziffern und/oder Buchstaben elastisch und schmiegsam gemacht werden, so daß gerade im Randbereich eine völlige Abdichtung zur Glasfläche 50 gegeben ist. Diese Art von Dichtung verhindert ein Fließen der Ätzpaste zwischen der Schablonenfolie 20 und der Glasfläche 50. Es besteht darüber hinaus auch die Möglichkeit, die Ränder 12 der Durchbrechungen 11 in Richtung zur Glasfläche 50 wulstartig auszubilden. Aufgrund dieser federnd-elastischen Ausgestaltung wird eine hohe Abdichtung zum Zwischenraum zwischen der Schablonenfolie 20 und der Glasfläche 50 erreicht.

Die Applikationsfolie 40 besteht aus Pappe, Karton, Papier, Kunststoffolie oder anderen geeigneten Werkstoffen.

Die Ätzpaste 60 besteht aus einer wässrigen Mischung, die sich wie folgt zusuammensetzt:
45% bis 50% Bariumsulfat
10% bis 12% Ammoniumhydrogenfluorid
11% bis 13% Polysaccharid auf der Basis von Galactose, Rhamnose oder Arabinose und Glucuronsäure bzw. einer Mischung aus diesen Substanzen,
wobei der Rest Wasser ist.

Bei den angegebenen Prozenten handelt es sich um Gewichtsprozente. Zur Herstellung der Ätzpaste kann anstelle einer wässrigen Komponente auch eine nicht wässrige Komponente verwendet werden, wie z.B. aus der Gruppe der Alkohole, Glykole, Ether und Glykolether, Ketone u.dgl.. Wesentlich ist, daß die pastöse Eigenschaft der Ätzpaste beibehalten wird.

## Patentansprüche

1. Vorrichtung zur Diebstahlssicherung von Kraftfahrzeugen durch einen in am Fahrzeug vorhandene Glasflächen vermittels einer Ätzpaste eingeätzten Buchstaben- und/oder Zahlen-Kenncode, bestehend aus einer rechteckförmigen, die Kennzeichen (10) in Form von durch Ausstanzungen erhaltene Durchbrechungen (11) tragenden Schablonenfolie (20) aus einem gegenüber der Ätzpaste resistenten Material, mit auf ihrer Rückseite (20a) aufgebrachter Beschichtung (25) aus einem Klebemittel, die mittels einer abziehbaren Trägerfolie (30) aus einem Ölpapier abgedeckt ist, und aus einer auf der Oberseite (20b) der Schablonenfolie (20) gehaltenen Applikationsfolie (40) aus einer Kunststoffolie mit auf ihrer der Schablonenfolie (20) zugekehrten Fläche (40a) aufgetragenen Beschichtung (45) aus einem Klebemittel zur Halterung und Fixierung von inselförmigen, bei der Herstellung der Durchbrechungen (11) für die Kennzeichen (10) durch Ausstanzen verbliebenen Schablonenfolienflächen (28), dadurch gekennzeichnet, daß die Schablonenfolie (20) mit ihrer Klebemittelschicht (25) auf der Trägerfolie (30) derart gehalten ist, daß ohne Zerstörung der Klebemittelschicht (25) die Schablonenfolie (20) von der Trägerfolie (30) abziehbar ist und daß zur Fixierung von keine Randverbindungen aufweisenden, durch Ausstanzen der Kenncode erhaltenen inselförmigen Schablonenfolienflächen (28) die Beschichtung (25) der Schablonenfolie (20) zur Glasfläche eine Klebkraft aufweist, die größer ist als die Klebkraft des Klebemittels der Beschichtung (45) der Applikationsfolie (40), wobei zum Einätzen konturenscharfer Kennzeichnungen in das Glas die Ätzpaste eine Konsistenz der Art aufweist, daß ein Kriechen der Ätzpaste zwischen der Schablonenfolie (20) und der Glasfläche unterbunden wird und daß die die Durchbrechungen (11) der Kennzeichen (10) begrenzenden Ränder (12) in der Schablonenfolie (20) gegenüber dem spröden Schablonenmaterial federnd bzw. weich-elastisch ausgebildet sind.

2. Vorrichtung nach Anspruch 1, dadurch gekennzeichnet, daß die Ätzpaste zum Einätzen konturenscharfer Kennzeichnungen in das Glas aus einem Gemisch folgender Zusammensetzung besteht:
45 % bis 50 % Bariumsulfat
10 % bis 12 % Ammoniumhydrogenfluorid
11 % bis 13 % Polysaccharid auf der Basis von Galactose, Rhamnose oder Arabinose und Glucuronsäure oder einer Mischung aus diesen Substanzen,
wobei der Rest Wasser ist.

3. Verfahren zum Einätzen eines Buchstaben- und/oder Zahlen-Kenncodes auf Glasflächen, insbesondere Glasscheiben von Kraftfahrzeugen, unter Verwendung einer Ätzpaste bei dem nach dem Abziehen der Trägerfolie (30) von der Schablonenfolie (20) diese auf eine Glasfläche (50) aufgeklebt, hierauf die Applikationsfolie (40) abgezogen, die Ätzpaste (60) im Bereich der Durchbrechungen (11) der Kennzeichen (10) in der Schablonenfolie (20) aufgetragen und nach einer ausreichenden Einwirkzeit die Schablonenfolie (20) zusammen mit den Resten der Ätzpaste entfernt wird, dadurch gekennzeichnet, daß eine Ätzpaste verwendet wird, die aus einem Gemisch folgender Zusammensetzung besteht:
45 % bis 50 % Bariumsulfat
10 % bis 12 % Ammoniumhydrogenfluorid
11 % bis 13 % Polysaccharid auf der Basis von Galactose, Rhamnose oder Arabinose und Glucuronsäure oder einer Mischung aus diesen Substanzen,
wobei der Rest Wasser ist.

4. Ätzpaste zum Einätzen eines Buchstaben- und/oder Zahlen-Kenncodes in an einem Fahrzeug vorhandene Glasflächen zur Diebstahlssicherung von Kraftfahrzeugen unter Verwendung einer Vorrichtung nach einem der Ansprüche 1 und 2, dadurch gekennzeichnet, daß die nicht im Rand- und Konturenbereich (12) der Durchbrechungen (11) der Kennzeichen (10) in der Schablonenfolie (20) zwischen dieser und der Glasfläche (50) kriechende oder sich verteilende Ätzpaste (60) zur Ausbildung scharfer Konturen der Kennzeichen (10) aus einem Gemisch folgender Zusammensetzung besteht:
45% bis 50% Bariumsulfat
10% bis 12% Ammoniumhydrogenfluorid
11% bis 13% Polysaccharid auf der Basis von Galactose, Rhamnose oder Arabinose und Glucuronsäure oder einer Mischung aus diesen Substanzen,
wobei der Rest Wasser ist.

## Claims

1. Antitheft device for motor vehicles consisting of an alphabetical and/or numerical indentification code etched into existing glass surfaces in the vehicle by means of an etching paste, comprising a rectangular stencil foil (20) bearing the identification markings (10) in the form of perforations obtained by stamped-out foil portions of a material resistant to the etching paste, with a coating (25) of an adhesive applied to its rear (20a) which is covered with the aid of a carrier foil (30) of an oil paper which can be drawn off, and of an application foil (40) of a plastic sheet retained on the top side (20b) of the stencil foil (20) having, on the surface (40a) of the same same facing the stencil foil (20), an applied coating (45) of an adhesive for mounting and fixating the island-like stencil foil areas (28) left over during the production of the perforations (11) for the identification markings (10) by means of stamping out,
**characterized in that**
the stencil foil (20), with its adhesive layer (25), is retained on the carrier foil (30) in such a way that the stencil foil (20) can be drawn off the carrier foil (30) without destroying the layer of adhesice (25) and in that, for the fixation of island-like stencil foil areas (28) devoid of marginal connections obtained by the identification code being stamped out, the coating (25) of the stencil foil (20) possesses, in relation to the glass surface, an adhesive power which is superior to the adhesive power of the adhesive agent of the coating (45) of the application foil (40), in which case, for etching sharply contoured identification markings into the glass, the etching paste possesses a consistency of such a kind that a creeping of the etching paste between the stencil foil (20) and the glass surface is prevented, and in that the edges (12) in the stencil foil (20) delimiting the perforations (11) of the identification marks (10), in comparison with the brittle foil material, are formed so as to be springable or soft-elastic.

2. Device according to the Claim 1,
**characterized in that**
the etching paste for etching sharply contoured identification markings into the glass is comprised of a moxture possessing the following composition:
45% to 50% barium sulphate
10% to 12% ammonium hydrogen fluoride
11% to 13% polysaccharide on the basis of galactose, rhamnose or arabinose and glucuronic acid, or of a mixture of these substances,
the residue being water.

3. Method for etching and alphabetical and/or numerical identification code into glass surfaces, more particularly glass panes in motor vehicles while employing an etching paste, in which method, after the carrier foil (30) has been drawn off the stencil foil (20), the same is adhesively affixed to a glass surface (50), whereupon the application foil (40) is drawn off, the etching paste (60) is applied within the area of the eprforations (11) of the identification markings (10) in the stencil foil (20) and, after an adequate exposure time, the stencil foil (20) is removed together with the residual etching paste,
**characterized in that**
an etching paste is employed that is comprised of a mixture possessing the following composition:
45% to 50% barium sulphate
10% to 12% ammonium hydrogenfluoride
11% to 13% polysaccharide on the basis of galactose, rhamnose or arabinose and glucuronic acid or a mixture of these substances,
the residue being water.

4. Etching paste for etching an alphabetical and/or numerical identification code into glass surfaces existing in a vehicle for securing motor vehicles against theft while use is made of a device according to either Claim 1 or Claim 2,
**characterized in that**
the etching paste (60) which will not creep or spread within the marginal and contour area (12) of the perforations (11) of the identification markings (10) in the stencil foil (20) between the same and the glsss surface (50), for the formation of sharp outlines of the identification markings (10) is comprised of a mixture possessing the following composition:
45% to 50% barium sulphate
10% to 12% ammonium hydrogenfluoride
11% to 13% polysaccharide on the basis of galactose, rhamnose or arabinose and glucuronic acid or a mixture of these substances,
the residue being water.

## Revendications

1. Dispositif antivol pour véhicules automobiles par un code d'identification à lettres et/ou à chiffres gravé au moyen d'une pâte de gravure sur des surfaces de verre existant sur le véhicule consistant en une feuille de marquage au pochoir (20) rectangulaire, qui porte les signes caractéristiques (10) sous forme de découpures (11) obtenues par poinçonnages, en une matière qui résiste à la pâte de gravure, avec une enduction (25) de colle appliquée sur son verso (20a), feuille qui est recouverte au moyen d'une feuille support (30) pelable en un papier huilé, et en une feuille d'application (40) maintenue sur la face supérieure (20b) de la feuille de marquage au pochoir (20) avec une enduction (45) de colle appliquée sur sa face (40a) tournée vers la feuille de marquage au pochoir (20) pour supporter et fixer des surfaces de feuille de marquage au pochoir (28) en forme d'îles qui sont restées lors de la réalisation des découpures (11) pour les signes caractéristiques (10) par poinçonnage, **caractérisé en ce** que la feuille de marquage au pochoir (20) est maintenue avec sa couche de colle (25) sur la feuille support (30) de telle manière que la feuille de marquage au pochoir (20) peut être décalquée de la feuille support (30) sans destruction de la couche de colle (25) et que, pour fixer des surfaces de feuille de marquage au pochoir (28) en forme d'îles obtenues par le poinçonnage du code d'identification et ne présentant pas d'assemblages de bords, l'enduction (25) de la feuille de marquage au pochoir (20) présente une force d'adhérence à la surface de verre qui est supérieure à la force d'adhérence de la colle de l'enduction (45) de la feuille d'application (40), la pâte de gravure présentant, pour la gravure de signes distinctifs aux contours nets, une consistance telle qu'un fluage de la pâte de gravure entre la feuille de marquage au pochoir (20) et la surface de verre est empêché et que les bords (12) qui délimitent les découpures (11) des signes distinctifs (10) sont configurés en étant élastiques ou souplement élastiques par rapport à la matière du pochoir qui est fragile.

2. Dispositif selon la revendication 1, **caractérisé en ce** que la pâte de gravure pour la gravure de signes distinctifs aux contours nets dans le verre est constituée par un mélange de la composition suivante :
45 à 50 % de sulfate de baryum
10 à 12 % de fluoride d'hydrogène d'ammonium
11 à 13 % de polysaccharide sur la base de galactose, de rhamnose ou d'arabinose et d'acide glucorinique ou d'un mélange de ces substances,
le reste étant de l'eau.

3. Dispositif pour la gravure d'un code d'identification à lettres et/ou à chiffres sur des surfaces de verre, en particulier sur des vitres de véhicules automobiles, en utilisant une pâte de gravure, dans lequel, après avoir décalqué la feuille support (30) de la feuille de marquage au pochoir (20), celle-ci est collée sur une surface de verre (50), la feuille d'application (40) étant ensuite décalquée, la pâte de gravure (60) étant appliquée dans la zone des découpures (11) des signes distinctifs (10) dans la feuille de marquage au pochoir (20) et la feuille de marquage au pochoir (20) étant enlevée avec les restes de pâte de gravure après un temps d'action suffisant, **caractérisé en ce** que l'on utilise une pâte de gravure qui est constituée par un mélange de la composition suivante :
45 à 50 % de sulfate de baryum
10 à 12 % de fluoride d'hydrogène d'ammonium
11 à 13 % de polysaccharide sur la base de galactose, de rhamnose ou d'arabinose et d'acide glucorinique ou d'un mélange de ces substances,
le reste étant de l'eau.

4. Pâte de gravure pour la gravure d'un code d'identification à lettres et/ou à chiffres sur des surfaces de verre existant sur un véhicules automobile pour assurer les véhicules automobiles contre le vol en utilisant un dispositif selon l'une des revendications 1 et 2, **caractérisée en ce** que la pâte de gravure (60) qui ne flue pas ou qui ne se répartit pas dans la zone des bords et des contours (12) des découpures (11) des signes distinctifs (10) dans la feuille de marquage au pochoir (20) entre celle-ci et la surface de verre (50) est constituée, pour configurer des contours nets des signes distinctifs (10), par un mélange de la composition suivante :
45 à 50 % de sulfate de baryum
10 à 12 % de fluoride d'hydrogène d'ammonium
11 à 13 % de polysaccharide sur la base de galactose, de rhamnose ou d'arabinose et d'acide glucorinique ou d'un mélange de ces substances,
le reste étant de l'eau.
